# EUROPÄISCHE PATENTANMELDUNG

(11) **EP 2 248 780 A1**
(43) Veröffentlichungstag der Anmeldung: **10.11.2010**
(21) Anmeldenummer: 10004615.0
(22) Anmeldetag: 03.05.2010
(51) Int. Cl.: C04B 24/26, C04B 22/08, C04B 40/00, C04B 103/10

(54) **Abbinde- und Enthärtungsbeschleuniger**

(30) Priorität: 06.05.2009 DE 102009019886; 05.06.2009 DE 102009024270
(71) Anmelder: BK Giulini GmbH, 67065 Ludwigshafen (DE)
(72) Erfinder: Lunkenheimer, Rudolf, 55263 Wackernheim (DE); Dörrer, Hubert, 67117 Limburgerhof (DE); Stein, Jochen, 67067 Ludwigshafen (DE); Exner, Reiner, 67157 Wachenheim (DE)
(74) Vertreter: Wagner, Jutta

(57) **Zusammenfassung**

Die vorliegende Erfindung betrifft Abbinde- und Erhärtungsbeschleuniger zur Beschleunigung des Abbindens und Erhärtens von Zement und diesen enthaltenden Gemischen, wobei der Beschleuniger mindestens eine Aluminiumverbindung und mindestens ein Polymer enthält, wobei das Polymer als Monomereinheiten bzw. Monomereinheiten mindestens Acrylamid und/oder mindestens Methacrylamid und/oder mindestens ethylenisch ungesättigten Verbindungen, die eine Dialkylaminogruppe oder eine Trialkylammoniumgruppe tragen, enthält, sowie die Verwendung dieser Beschleuniger und ein Verfahren zum Beschleunigen des Abbindens und Erhärtens von Zement.

## Beschreibung

Gegenstand der vorliegenden Erfindung sind Abbinde- und Erhärtungsbeschleuniger zur Beschleunigung des Abbindens und Erhärtens von Zement und diesen enthaltenden Gemischen, sowie die Verwendung dieser Beschleuniger und ein Verfahren zum Beschleunigen des Abbindens und Erhärtens von Zement und anderen hydraulischen Bindemitteln bzw. von Zement und andere hydraulische Bindemittel enthaltenden Gemischen.

Mittel zum Beschleunigen des Abbindens und/oder Erhärtens von Zement sind seit langem bekannt und werden in verschiedenen Bereichen eingesetzt, wobei im besonderen der Spritzbeton erwähnenswert ist. Spritzbeton muss sehr schnell abbinden, um z.B. beim Tunnelbau höchste Sicherung und einen reibungslosen Vortrieb zu gewährleisten.

Der Markt bietet entsprechende Produkte an, die im wesentlichen auf Aluminiumsulfat und Aluminiumhydroxysulfaten (basischen Aluminiumsulfaten), teilweise auch auf Fluorid-haltigen Aluminiumverbindungen basieren.

Aluminiumsulfat und Aluminiumhydroxysulfate sind als Abbindebeschleuniger gut geeignet, wobei technisch von großem Vorteil ist, den Abbindebeschleuniger in flüssiger Form bereitzustellen. Bedingt durch die geringe Wasserlöslichkeit von Aluminiumsulfat und der Aluminiumhydroxysulfate von ca. 8% als Al₂O₃ sind hohe Mengen an diesen Lösungen notwendig, um den oben erwähnten Anforderungen eines Abbinde- und Erhärtungsbeschleunigers zu genügen. Dies hat zur Folge, dass speziell beim Nassspritzverfahren über die Aluminiumsulfat- oder eine Aluminiumhydroxysulfatlösung große Wassermengen in den Beton eingebracht werden, die zu einer Erniedrigung der Druckfestigkeit führen. Werden zu niedrige Dosiermengen verwendet, ist die Haftung des gespritzten Betons auf dem Untergrund, im besonderen in der Kalotte des Tunnels nur ungenügend.

Diesem Nachteil wird unter anderem dadurch Rechnung getragen, dass auf Sulfat- oder Fluorid-haltigen Aluminiumverbindungen basierenden Abbindebeschleuniger als Suspensionen angeboten werden, die eine höhere Konzentration an Wirksubstanz enthalten. Zum Beispiel beschreiben EP 812 812 und US 5,935,318 ein beschleunigendes Zusatzmittel für zementartige Zusammensetzungen, das Aluminiumsulfat, weitgehend frei von Aluminiumhydroxyd, und mindestens ein Alkanolamin enthält. Das beschleunigende Zusatzmittel kann auch einen Stabilisator, ausgewählt aus Polymerdispersionen wie Styrol-Butadien-Latices oder Sepiolith enthalten. Aus EP 1 546 060 sind Suspensionen, basierend auf Aluminiumsulfaten mit der allgemeinen Formel Al₂(OH)_{X}(SO₄)_{y}•zH2O, mit z = 0 bis 18, bevorzugt 10 bis 16, und y > 1,5 und x = 6 - 2y bekannt; als Stabilisator ist Bentonit erwähnt. In WO 2008/006410 wird ein Beschleuniger für Spritzbeton oder Spritzmörtel beschrieben, der als wässrige Dispersion vorliegt, die 25 bis 40 Gew.-% Aluminiumsulfat und mindestens eine weitere Aluminiumverbindung enthält, so dass das molare Verhältnis von Aluminium zu Sulfat in der Dispersion 1,35 bis 0,70 beträgt, wobei die wässrige Dispersion einen anorganischen Stabilisator aufweist, der ein Magnesiumsilikat umfasst. Bei diesen Beschleunigern ist in der Regel ein Haften des gespritzten Betons gewährleistet. Nachteilig sind weiterhin die niedrigen Frühfestigkeiten.

Höher konzentrierte flüssige Abbindebeschleuniger basieren ebenfalls größtenteils auf Sulfat- oder Fluorid-haltigen Aluminiumverbindungen, die durch verschiedene Chemikalien stabilisiert werden. Beispiele für solche Stabilisatoren sind Carbonsäuren, Dicarbonsäuren, Hydroxycarbonsäuren, Aminocarbonsäuren, Phosphorsäure, Phosphorige Säure, Phosphonsäuren, Amidosulfonsäure und Harnstoff. Beispiele solcher Abbindebeschleuniger sind u.a. veröffentlicht in EP 946 451, EP 1 167 315, EP 1 167 317, EP 1 237 827, EP 1 422 205, EP 1 575 869, EP 1 713 744, EP 1 964 824, EP1 964 825, WO 00/78688, WO 01/42165, WO03/029163, WO 03/045872, WO 03/106375, WO 2004/076382, WO 2004/106258, WO 2005/028398, WO 2005/040059, WO 2006/010407, WO 2006/074739, WO 2007/022852 und JP 2001130935. Ein Nachteil dieser Beschleuniger liegt in den hohen Herstell- und Rohstoffkosten begründet. Ein weiterer Nachteil ist, dass zwar das Handelsprodukt relativ niedrig, jedoch die Wirksubstanz relativ hoch dosiert werden muss, um gute Frühfestigkeiten zu erzielen. Dies wiederum führt zu hohen Kosten beim Gebrauch dieser Beschleuniger.

Aufgabe der Erfindung war es daher, einen effizienteren Abbindebeschleuniger zur Verfügung zustellen, der bezüglich der Wirksubstanz bessere Frühfestigkeiten und/oder im Falle seiner Verwendung beim Spritzbeton ein besseres Haftvermögen auf dem Substrat gewährleistet, als die oben erwähnten Beschleuniger. Unter dem Begriff Gehalt der Wirksubstanz soll hier näherungsweise der Gehalt an Aluminium, ausgedrückt als Al₂O₃, eines Beschleunigers verstanden werden.

Die Aufgabe konnte völlig überraschend durch Abbinde- und Erhärtungsbeschleuniger gelöst werden, die aus mindestens einer Aluminiumverbindung und mindestens einem Polymer bestehen, wobei das Polymer als Monomereinheit bzw. Monomereinheiten mindestens Acrylamid und/oder mindestens Methacrylamid und/oder mindestens eine ethylenisch ungesättigte Verbindung, die eine Dialkylaminogruppe oder eine Trialkylammoniumgruppe tragen enthält.

Es können mehrere Aluminiumverbindungen und/oder mehrere Polymere enthalten sein. Neben Aluminiumverbindung(en) und Polymer(en) kann der Beschleuniger auch weitere Bestandteile enthalten, insbesondere Verdünnungsmittel wie Wasser und andere übliche Zusätze, beispielsweise Stabilisierungsmittel, Komplexbildner, Korrosionsinhibitoren usw.

Die Aluminiumverbindung ist ein Komplex und/oder ein Salz des Aluminiums, wobei bevorzugt Sulfat und/oder Nitrat und/oder Nitrit und/oder Chlorid und/oder Carboxylat und/oder Mischungen von Carboxylaten und/oder Phosphonat und/oder Phosphat und/oder Phosphit als Anion enthalten sind. Auch basische Verbindungen, also Komplexe und/oder Salze des Aluminiums, welche neben den Anionen auch Hydroxylgruppen enthalten, zählen zu den erfindungsgemäßen Aluminiumverbindungen. Das Carboxylatanion ist bevorzugt ausgewählt unter Formiat, Acetat, Glykolat, Laktat, Maleinat, Citrat, Tartrat, Oxalat, Malonat und Mischungen davon. Beispiele solcher Verbindungen sind unter anderem in EP 812 812 A1, US 5,935,318, EP 1 546 060 A3, WO 2008/006410 A1, EP 946 451 B2, EP 1 167 315 A1, EP 1 167 317 A1, EP 1 237 827 B1, EP 1 422 205 A1. EP 1 575 869 A1, EP 1 713 744 A1, EP 1 964 824 A1, EP1 964 825 A1, WO 00/78688 A1, WO 01/42165 A2, WO 03/029163 A2, WO 03/045872 A1, WO 03/106375 A1, WO 2004/076382 A1, WO 2004/106258 A3, WO 2005/028398 A1, WO 2005/040059 A2, WO 2006/010407 A1,WO 2006/074739 A1, WO 2007/022852 A2, JP 2001130935, EP 0 372 715 A1, US 5059 893, US 5 895 688 A1, US 6 423 867 A1, US 6 423 133 B1 und WO 00/64833 beschrieben. Es sind auch alle Mischungen, wie sie z.B. in den zitierten Patenten beschrieben werden, brauchbar, sofern sie mindestens eine Aluminiumverbindung enthalten und mit dem/den erfindungsgemäßen Polymeren zu dem erfindungsgemäßen Abbinde- und Erhärtungsbeschleuniger kombiniert werden.

Die erfindungsgemäßen Polymere enthalten als Monomereinheit mindestens Acrylamid und/oder Methacrylamid und/oder eine ethylenisch ungesättigte Verbindung, die eine Dialkylaminogruppe oder eine Trialkylammoniumgruppe trägt. Es können Homo- oder Copolymere sein, wobei unter Copolymeren Polymere mit zwei, drei oder noch mehr verschiedenen Monomereinheiten zu verstehen sind. Häufig bildet Acrylamid den überwiegenden Teil der Monomereinheiten. Die Polymere können ausschließlich aus Acrylamid und/oder Methacrylamid und/oder ethylenisch ungesättigten Verbindungen, die eine Dialkylaminogruppe oder eine Trialkylammoniumgruppe tragen, aufgebaut sein oder aber weitere Monomereinheiten enthalten. Als weitere Monomereinheiten kommen vor allem ethylenisch ungesättigte Verbindungen in Betracht, welche anionische Gruppen, insbesondere Säureaniongruppen, tragen. Aber auch Ethylen, Acrylsäureester, Methacrylsäureester, Styrol und andere copolymerisierbare Monomere sind möglich. Die Polymere können anionisch, kationisch, nichtionisch oder amphoter sein. Bevorzugt werden amphotere, nichtionische und kationische Polymere, besonders bevorzugt nichtionische und kationische Polymere. Nichtionische Polymere sind vorzugsweise nur aus Acrylamid und Methacrylamid, insbesondere nur aus Acrylamid aufgebaut. Kationische Polymere enthalten vorzugsweise Acrylamid und ethylenisch ungesättigte Verbindungen, welche eine Dialkylaminogruppe oder eine Trialkylammoniumgruppe tragen. Anionische Polymere enthalten vorzugsweise Acrylamid und Monomereinheiten, welche eine anionische Gruppe tragen wie beispielsweise Acrylsäure oder Methacrylsäure.

Unter den ethylenisch ungesättigten Verbindungen mit Dialkylamino-oder Trialkylammoniumgruppe sind Acrylsäure-dialkylaminoalkylester und/oder Methacrylsäure-dialkylaminoalkylester und/oder Dialkylaminoalkylacrylamide und/oder Dialkylaminoalkylmethacrylamide und/oder 2-(Acryloyloxy)-ethyl-trialkyl-ammoniumchloride und/oder 2-(Methacryloyloxy)-ethyl-trialkylammoniumchloride und/oder 3-(Methacrylamido)-propyl-trialkylammoniumchloride und/oder 3-(Acryl-amido)-propyl-trialkylammoniumchloride bevorzugt. Besonders bevorzugt handelt es sich bei den Alkylamino- bzw. Alkylammoniumgruppen um C₁ bis C₆ -, vorzugsweise um C₁ bis C₃ - Alkylamino- bzw. Alkylammoniumgruppen, wobei die Alkylgruppen gleich oder verschieden sein können. Besonders bevorzugt handelt es sich bei den Alkylgruppen der Ester um C₁ bis C₆ -, vorzugsweise um C₂ bis C₃ - Alkylgruppen. Ganz besonders bevorzugt sind Acrylsäure-2-dimethylaminoethylester und/oder Methacrylsäure-2-dimethylaminoethylester und/oder 2-(Dimethylamino)-ethylacrylamid und/oder 2-(Dimethylamino)-ethylmethacrylamid und/oder 2-(Acryloyloxy)-ethyl-trimethylammoniumchlorid und/oder 2-(Methacryloyloxy)-ethyl-trimethylammoniumchlorid und/oder 3-(Methacrylamido)-propyl-trimethylammoniumchlorid und/oder 3-(Acrylamido)-propyl-trimethylammoniumchlorid.

Das mittlere Molekulargewicht der Polymere liegt bevorzugt bei mindestens 100.000 Dalton, besonders bevorzugt bei größer 1.000.000 Dalton. Es werden Polymere mit einem solchen Molekulargewicht bevorzugt, die es ermöglichen, Formulierungen mit einer Viskosität < 5000 mPas, bevorzugt < 1000 mPas, besonders bevorzugt < 500 mPas herzustellen. Es sind auch Polymere mit Molekulargewichten kleiner 100.000 Dalton einsetzbar, jedoch ist für diese der gewünschte Effekt der hohen Frühfestigkeiten im allgemeinen nicht oder nur ungenügend ausgeprägt.

Der Ladungscharakter des Polymeren ist unkritisch, sofern der Beschleuniger als Zweikomponentensystem verwendet wird, also in einem solchen Fall, dass die Aluminiumverbindung und das Polymer separat dosiert werden. Bei Einkomponentensystemen, welche vorliegen, wenn die Aluminiumverbindung mit mindestens einem erfindungsgemäßen Polymer vermischt ist, ist der Ladungscharakter des Polymeren ebenfalls unkritisch, sofern die Aluminiumverbindung unlöslich in Wasser ist. Bei in Wasser löslichen Aluminiumverbindungen muss die Verträglichkeit zwischen Polymer und Aluminiumverbindung überprüft werden.

Das Polymer kann als Pulver oder wässrige Lösung oder inverse Emulsion oder Wasser in Wasser Emulsion verwendet werden. Eine Wasser in Wasser Emulsion macht sich die Unverträglichkeit von Polymeren zu nutze. Partiell mischbare Polymere separieren nicht, sondern bilden im allgemeinen ein System vom Emulsionstyp. Ein Polymer liegt in der kontinuierlichen Phase gelöst vor, das andere feinverteilt in Wassertröpfchen gelöst in dieser kontinuierlichen Phase.

Die Effektivität der Polymere ist unter anderem von deren Verfügbarkeit in der Betonmatrix abhängig. Die Verfügbarkeit ist für die erfindungsgemäße Verwendung wiederum umso höher, je besser das Polymer in Wasser bzw. in der Betonmatrix, also einer wässrigen Flüssigkeit mit einem pH von mindestens 9, typischerweise von etwa 11 bis 13, löslich ist. Deshalb werden Polyacrylamide, die bekanntlich gut wasserlöslich sind, bevorzugt. Die Polyacrylamide können als Homopolymere oder Copolymere vorliegen, wobei unter Copolymeren solche Polymere zu verstehen sind, die aus mehr als einer Art von Monomeren hergestellt wurden. Besonders bevorzugte Monomere sind hierbei für nichtionische Polymere Acrylamid, für kationische Polymere Acrylamid, 2-(Acryloyloxy)-ethyl-trimethylammoniumchlorid und 3-(Acrylamido)-propyl-trimethylammoniumchlorid, für amphotere Polymere Acrylamid, 2-(Acryloyloxy)-ethyl-trimethylammoniumchlorid, 3-(Acrylamido)-propyl-trimethylammoniumchlorid und Acrylsäure und für anionische Polymere Acrylamid und Acrylsäure.

Der erfindungsgemäße Abbinde- und Erhärtungsbeschleuniger kann als wässrige Lösung oder als Suspension oder als Pulver vorliegen. Hierbei sind unter dem Begriff Suspension solche Systeme zu verstehen, die aus mehreren Phasen bestehen, von denen eine kontinuierlich und mindestens eine weitere feinverteilt ist, wobei die feinverteilte Phase Feststoffteilchen im µm-Bereich enthält, aber auch solche in kolloidalen Dimensionen unter 0,1 µ enthalten kann.

In der wässrigen Lösung oder in der Suspension liegt die Aluminiumverbindung in einer Konzentration, gemessen als Gewichtsprozent Al₂O₃, von mindestens 6%, bevorzugt von 6 bis 25%, besonders bevorzugt von 6 bis 20% vor. Das Polymer liegt in einer Konzentration von mindestens 0,005 Gewichtsprozent, bevorzugt von 0,005 bis 5 Gewichtsprozent, besonders bevorzugt von 0,005 bis 3 Gewichtsprozent vor.

In der pulvrigen Ausführungsform des erfindungsgemäßen Abbinde-und Erhärtungsbeschleunigers liegt die Aluminiumverbindung in einer Konzentration, gemessen als Gewichtsprozent Al₂O₃, von mindestens 15 %, bevorzugt von 15 bis 60%, besonders bevorzugt von 20 bis 50 % vor. Das Polymer liegt in einer Konzentration von mindestens 0,025 Gewichtsprozent, bevorzugt von 0,025 bis 5 Gewichtsprozent vor.

Bevorzugt wird der erfindungsgemäße Beschleuniger als Mischung zugeführt. Es ist auch möglich, die Komponenten des Abbindebeschleunigers getrennt zu applizieren. Dabei gilt für die Konzentration der Aluminiumverbindung das oben gesagte. Für die Polymere gilt, dass zum einen zugunsten des Wasserhaushaltes des zu beschleunigenden Gemisches das Polymer so konzentriert wie möglich angewendet werden soll, zum anderen aber auch die Verfügbarkeit des Polymeren z.B. in der Betonmatrix sehr hoch sein muss, um den Effekt hoher Frühfestigkeiten zu erreichen. Im Fall hochmolekularer Polymere wie Polyacrylamide mit Molekulargewichten größer 1.000.000 Dalton wäre eine Auflösung des Polymeren, welches in Pulverform oder als inverse Emulsion appliziert wird, in dem zu beschleunigenden Gemisch in kurzer Zeit nicht möglich. Der Effekt der Steigerung der Frühfestigkeit bleibe aus oder wäre nur schwach ausgeprägt. Bevorzugt werden deshalb die Polymere als wässrige Lösung oder als Wasser in Wasser Emulsion eingesetzt.

Die erfindungsgemäßen Beschleuniger eignen sich in hervorragender Weise zum Beschleunigen des Abbindens und Erhärtens von Zement bzw. hydraulischen Bindemitteln und Baumaterialien auf deren Basis wie Beton und Mörtel. Besonders bevorzugte Einsatzbereiche sind Spritzmörtel und Spritzbeton sowohl für das Trocken- als auch das Nassspritzverfahren. Der erfindungsgemäße Beschleuniger wird dabei bevorzugt im Bereich von 1 bis 15 %, bezogen auf das Bindemittel/den Zement, eingesetzt.

Die Erfindung soll anhand der folgenden Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung. In den Beispielen liegen die Polymere in gelöster Form vor; dies bedeutet, dass z.B. im Fall von inversen Emulsionen lediglich das Polymer in der wässrigen Formulierung gelöst wird, nicht aber das Öl einer Öl-haltigen Emulsion.

### Anwendungstechnischer Test:

Als Testmuster für den Penetrometertest wird ein Zementmörtel mit dem zu untersuchenden Beschleuniger hergestellt. Der angemachte Mörtel wird, in Anlehnung an das Nassspritzverfahren, einige Zeit stehen gelassen. Nach der Standzeit wird der Mörtel aufgemischt, der Beschleuniger sehr schnell eingemischt und der Mörtel anschließend durch Schocken verdichtet. Nach Erreichen der jeweiligen Prüfzeit wird mit einem Penetrometer die nötige Kraft bestimmt, die zum Einstechen einer Prüfnadel in eine definierte Tiefe nötig ist. Durch Mehrfachmessungen und anschließende Mittlung der Messwerte werden Inhomogenitäten im Mörtel berücksichtigt. Die für das Einstechen nötige Kraft ist direkt proportional zur Festigkeit des Mörtels.

### Vergleichsbeispiel 1

Als Abbindebeschleuniger wird ein Gemisch gemäß EP 812 812 A1 aus 60% Aluminiumsulfat mit einem Al₂O₃-Gehalt von 17% (im folgenden mit AS abgekürzt) und 4% Diethanolamin als wässrige Suspension eingesetzt. Als Zement kommt ein CEM I 42,5 R zum Einsatz, es werden 7,0 Gew.-% Beschleuniger bezogen auf den Zement eingesetzt. Die Ergebnisse des Penetrometertests sind in Tabelle 1 dargestellt.

### Beispiel 2

Analog Vergleichsbeispiel 1, wobei im Abbindebeschleuniger zusätzlich 0,1% kationisches pulverförmiges Polyacrylamid gelöst wurde. Die Ergebnisse des Penetrometertests sind in Tabelle 1 dargestellt.

### Beispiel 3

Analog Vergleichsbeispiel 1, wobei im Abbindebeschleuniger zusätzlich 0,2% kationisches pulverförmiges Polyacrylamid gelöst wurde. Die Ergebnisse des Penetrometertests sind in Tabelle 1 dargestellt.

### Vergleichsbeispiel 4

Analog Vergleichsbeispiel 1, wobei als Abbindebeschleuniger eine wässrige Lösung von 0,2% kationischem pulverförmigem Polyacrylamid eingesetzt wird. Die Ergebnisse des Penetrometertests sind in Tabelle 1 dargestellt.

**Tabelle 1**

| | **Kraft [N] nach** | | | | | |
|---|---|---|---|---|---|---|
| | **3 min** | **6 min** | **15 min** | **30 min** | **45 min** | **60 min** |
| **Vbsp 1** | 0,06 | 0,09 | 0,13 | 0,23 | 0,54 | 0,85 |
| **Bsp 2** | 0,4 | 0,50 | 0,52 | 0,87 | 0,96 | 1,32 |
| **Bsp 3** | 0,45 | 0,66 | 0,96 | 1,30 | 2,10 | 2,63 |
| **Vbsp 4** | 0,0 | 0,0 | 0,0 | 0,0 | 0,02 | 0,02 |

### Vergleichsbeispiel 5

Als Abbindebeschleuniger wird gemäß EP 1 546 060 eine Aluminiumverbindung der allgemeinen Formel Al₂(OH)_{X}(SO₄)_{y}•zH₂O mit x=1,34 und y=2,33, Al₂O₃-Gehalt 12,5 Gew.-% stabilisiert mit Bentonit als wässrige Suspension eingesetzt. Als Zement kommt ein CEM I 42,5 R zum Einsatz, es werden 6,5 Gew.-% Beschleuniger bezogen auf den Zement eingesetzt. Die Ergebnisse des Penetrometertests sind in Tabelle 2 dargestellt.

### Beispiel 6

Analog Vergleichsbeispiel 5, wobei im Abbindebeschleuniger zusätzlich 0,27 % kationisches pulverförmiges Polyacrylamid gelöst wurde. Die Ergebnisse des Penetrometertests sind in Tabelle 2 dargestellt.

### Beispiel 7

Analog Vergleichsbeispiel 5, wobei im Abbindebeschleuniger zusätzlich 0,4 % einer inversen Emulsion eines nichtionischen Polyacrylamids gelöst wurde. Die Ergebnisse des Penetrometertests sind in Tabelle 2 dargestellt.

### Beispiel 8

Analog Vergleichsbeispiel 5, wobei im Abbindebeschleuniger zusätzlich 0,4 % einer inversen Emulsion eines anionischen Polyacrylamids gelöst wurde. Die Ergebnisse des Penetrometertests sind in Tabelle 2 dargestellt.

### Beispiel 9

Analog Vergleichsbeispiel 5, wobei im Abbindebeschleuniger zusätzlich 0,8 % einer inversen Emulsion eines nichtionischen Polyacrylamids gelöst wurde. Die Ergebnisse des Penetrometertests sind in Tabelle 2 dargestellt.

**Tabelle 2**

| | **Kraft [N] nach** | | | | | |
|---|---|---|---|---|---|---|
| | **3 min** | **6 min** | **15 min** | **30 min** | **45 min** | **60 min** |
| **Vbsp 5** | 0,32 | 0,32 | 0,64 | 1,27 | 1,75 | 1,81 |
| **Bsp 6** | 1,01 | 1,26 | 2,11 | 2,79 | 4,07 | 4,82 |
| **Bsp 7** | 0,5 | 0,67 | 1,03 | 2,24 | 2,75 | 3,3 |
| **Bsp 8** | 0,44 | 0,54 | 0,8 | 1,48 | 1,93 | 2,61 |
| **Bsp 9** | 0,76 | 1,08 | 1,54 | 2,57 | 3,37 | 4,73 |

### Vergleichsbeispiel 10

Als Abbindebeschleuniger wird eine Aluminiumsulfat-Lösung mit einem Al₂O₃-Gehalt von 8,3 Gew.-% eingesetzt. Als Zement kommt zuerst ein CEM I 42,5 R und dann ein CEM 11/A 42,5 R zum Einsatz, es werden 9,0 Gew.-% Beschleuniger bezogen auf den Zement eingesetzt. Die Ergebnisse des Penetrometertests sind in Tabelle 3 dargestellt.

### Beispiel 11

Analog Vergleichsbeispiel 10, wobei im Abbindebeschleuniger zusätzlich 0,3 % kationisches pulverförmiges Polyacrylamid gelöst wurde. Die Ergebnisse des Penetrometertests sind in Tabelle 3 dargestellt.

### Vergleichsbeispiel 12

Analog Vergleichsbeispiel 10, wobei eine wässrige Lösung von 0,3 % kationischem Polyacrylamid als Abbindebeschleuniger eingesetzt wird. Die Ergebnisse des Penetrometertests sind in Tabelle 3 dargestellt.

**Tabelle 3**

| | **CEM I 42,5 R** | | | | | |
|---|---|---|---|---|---|---|
| | **Kraft [N] nach** | | | | | |
| | **3 min** | **6 min** | **15 min** | **30 min** | **45 min** | **60 min** |
| **Vbsp 10** | 0,07 | 0,08 | 0,15 | 0,31 | 0,45 | 0,56 |
| **Bsp 11** | 0,68 | 0,81 | 1,07 | 2,04 | 2,82 | 2,97 |
| **Vbsp 12** | 0,01 | 0,02 | 0,02 | 0,04 | 0,06 | 0,14 |

| | **CEM II/A-LL 42,5 R** | | | | | |
|---|---|---|---|---|---|---|
| | **Kraft [N] nach** | | | | | |
| | **3 min** | **6 min** | **15 min** | **30 min** | **45 min** | **60 min** |
| **Vbsp 10** | 0,06 | 0,08 | 0,12 | 0,22 | 0,56 | 0,83 |
| **Bsp 11** | 0,45 | 0,66 | 0,96 | 1,3 | 2,1 | 2,63 |
| **Vbsp 12** | 0,00 | 0,02 | 0,03 | 0,06 | 0,09 | 0,1 |

### Vergleichsbeispiel 13

Als Abbindebeschleuniger wird gemäß EP 946 451 eine wässrige Lösung bestehend aus basischem Aluminiumsulfat und Ameisensäure mit einem Al₂O₃-Gehalt von 10% und einem Ameisensäuregehalt von 1,7% eingesetzt. Als Zement kommt zuerst ein CEM I 42,5 R und dann ein CEM 11/A 42,5 R zum Einsatz, es werden 7,5 Gew.-% Beschleuniger bezogen auf den Zement eingesetzt. Die Ergebnisse des Penetrometertests sind in Tabelle 4 dargestellt.

### Beispiel 14

Analog Vergleichsbeispiel 13, wobei im Abbindebeschleuniger zusätzlich 0,3 % kationisches pulverförmiges Polyacrylamid gelöst wurde. Die Ergebnisse des Penetrometertests sind in Tabelle 4 dargestellt. Zum Vergleich sind auch die Ergebnisse von Vergleichsbeispiel 12 mit aufgeführt.

**Tabelle 4**

| | **CEM I 42,5 R** | | | | | |
|---|---|---|---|---|---|---|
| | **Kraft [N] nach** | | | | | |
| | **3 min** | **6 min** | **15 min** | **30 min** | **45 min** | **60 min** |
| **Vbsp 13** | 0,08 | 0,11 | 0,19 | 0,35 | 0,51 | 0,72 |
| **Bsp 14** | 0,77 | 0,81 | 0,97 | 1,58 | 1,88 | 2,6 |
| **Vbsp 12** | 0,01 | 0,02 | 0,02 | 0,04 | 0,06 | 0,14 |

| | **CEM II/A LL 42,5 R** | | | | | |
|---|---|---|---|---|---|---|
| | **Kraft [N] nach** | | | | | |
| | **3 min** | **6 min** | **Kraft 15 min** | **[N] nach 30 min** | **45 min** | **60 min** |
| **Vbsp 13** | 0,07 | 0,1 | 0,12 | 0,42 | 0,8 | 0,88 |
| **Bsp 14** | 0,65 | 0,69 | 1,03 | 2,14 | 3,17 | 4,35 |
| **Vbsp 12** | 0,00 | 0,02 | 0,03 | 0,06 | 0,09 | 0,1 |

### Vergleichsbeispiel 15

Als Abbindebeschleuniger wird gemäß EP 946 451 bzw. WO 00/78 688 A1 eine wässrige Lösung bestehend aus Aluminiumsulfat, Aluminiumhydroxid, Ameisensäure und Diethanolamin mit einem Al₂O₃-Gehalt von 10%, einem Ameisensäuregehalt von 1,7% und einem Diethanolamingehalt von 1,7% eingesetzt. Als Zement kommt ein CEM I 42,5 R zum Einsatz, es werden 7,5 Gew.-% Beschleuniger bezogen auf den Zement eingesetzt. Die Ergebnisse des Penetrometertests sind in Tabelle 5 dargestellt.

### Beispiel 16

Analog Vergleichsbeispiel 15, wobei im Abbindebeschleuniger zusätzlich 0,1 % kationisches pulverförmiges Polyacrylamid gelöst wurde. Die Ergebnisse des Penetrometertests sind in Tabelle 5 dargestellt.

**Tabelle 5**

| | **Kraft [N] nach** | | | | | |
|---|---|---|---|---|---|---|
| | **3 min** | **6 min** | **15 min** | **30 min** | **45 min** | **60 min** |
| **Vbsp 15** | 0,1 | 0,12 | 0,18 | 0,36 | 0,55 | 0,75 |
| **Bsp 16** | 0,66 | 0,71 | 0,95 | 1,63 | 1,99 | 2,53 |

### Vergleichsbeispiel 17

Als Abbindebeschleuniger wird gemäß EP 946 451 B2 eine wässrige Lösung bestehend aus Aluminiumsulfat, Aluminiumhydroxid, Ameisensäure und Magnesiumsulfat mit einem Al₂O₃-Gehalt von 15,1 %, einem Ameisensäuregehalt von 7,4 % und einem Magnesiumsulfatgehalt von 3,5 % eingesetzt. Als Zement kommt ein CEM II/A-S 52,5 R zum Einsatz, es werden 6,5 Gew.-% Beschleuniger bezogen auf den Zement eingesetzt. Die Ergebnisse des Penetrometertests sind in Tabelle 6 dargestellt.

### Beispiel 18

Analog Vergleichsbeispiel 17, wobei im Abbindebeschleuniger zusätzlich 0,1 % kationisches pulverförmiges Polyacrylamid gelöst wurde. Die Ergebnisse des Penetrometertests sind in Tabelle 6 dargestellt.

**Tabelle 6**

| | **Kraft [N] nach** | | | | | |
|---|---|---|---|---|---|---|
| | **3 min** | **6 min** | **15 min** | **30 min** | **45 min** | **60 min** |
| **Vbsp 17** | 0,69 | 0,95 | 1,48 | 2,87 | 3,83 | 5,09 |
| **Bsp 18** | 0,99 | 1,41 | 2,05 | 3,51 | 4,61 | 6,23 |

### Vergleichsbeispiel 19

Als Abbindebeschleuniger wird eine wässrige Lösung bestehend aus Aluminiumsulfat, Aluminiumhydroxid, Ameisensäure, Harnstoff und Silikat mit einem Al₂O₃-Gehalt von 14,6 %, einem Ameisensäuregehalt von 3,3 %, einem Harnstoffgehalt von 2 % und einem SiO₂ Gehalt von 0,5 % eingesetzt. Als Zement kommt ein CEM II/A-S 52,5 R (SP) zum Einsatz, es werden 6,5 Gew.-% Beschleuniger bezogen auf den Zement eingesetzt. Die Ergebnisse des Penetrometertests sind in Tabelle 7 dargestellt.

### Beispiel 20

Analog Vergleichsbeispiel 19, wobei im Abbindebeschleuniger zusätzlich 0,1 % kationisches pulverförmiges Polyacrylamid gelöst wurde. Die Ergebnisse des Penetrometertests sind in Tabelle 7 dargestellt.

**Tabelle 7**

| | **Kraft [N] nach** | | | | | |
|---|---|---|---|---|---|---|
| | **3 min** | **6 min** | **15 min** | **30 min** | **45 min** | **60 min** |
| **Vbsp 19** | 1,90 | 7,17 | 15,53 | 26,67 | 32,61 | 41,56 |
| **Bsp 20** | 2,78 | 8,95 | 17,25 | 28,23 | 35,76 | 46,32 |

### Vergleichsbeispiel 21

Als Abbindebeschleuniger wird eine wässrige Lösung bestehend aus Aluminiumsulfat, Aluminiumhydroxid, Ameisensäure, Diethanolamin und Silikat mit einem Al₂O₃-Gehalt von 14,6 %, einem Ameisensäuregehalt von 3,3 %, einem Diethanolamingehalt von 1 % und einem SiO₂ Gehalt von 0,5 % eingesetzt. Als Zement kommt ein CEM II/A-S 52,5 R zum Einsatz, es werden 6,5 Gew.-% Beschleuniger bezogen auf den Zement eingesetzt. Die Ergebnisse des Penetrometertests sind in Tabelle 8 dargestellt.

### Beispiel 22

Analog Vergleichsbeispiel 21, wobei im Abbindebeschleuniger zusätzlich 0,1 % kationisches pulverförmiges Polyacrylamid gelöst wurde. Die Ergebnisse des Penetrometertests sind in Tabelle 8 dargestellt.

**Tabelle 8**

| | **Kraft [N] nach** | | | | | |
|---|---|---|---|---|---|---|
| | **3 min** | **6 min** | **15 min** | **30 min** | **45 min** | **60 min** |
| **Vbsp 21** | 2,04 | 2,80 | 5,62 | 7,22 | 8,83 | 11,45 |
| **Bsp 22** | 2,58 | 3,57 | 7,02 | 8,33 | 10,68 | 12,44 |

## Patentansprüche

1. Abbinde- und Erhärtungsbeschleuniger,
**dadurch gekennzeichnet,**
**dass** der Beschleuniger mindestens eine Aluminiumverbindung und mindestens ein Polymer enthält, wobei das Polymer als Monomereinheiten mindestens Acrylamid und/oder Methacrylamid und/oder ethylenisch ungesättigten Verbindungen, die eine Dialkylaminogruppe oder eine Trialkylammoniumgruppe tragen, enthält.

2. Abbinde- und Erhärtungsbeschleuniger nach Anspruch 1, **dadurch gekennzeichnet, dass** die Aluminiumverbindung ein Komplex und/oder ein Salz des Aluminiums ist.

3. Abbinde- und Erhärtungsbeschleuniger nach Anspruch 1 oder 2, **dadurch gekennzeichnet, dass** die Aluminiumverbindung ein Komplex oder ein Salz des Aluminiums ist, wobei der Ligand oder das Anion ausgewählt ist unter Sulfat, Nitrat, Nitrit, Chlorid, Carboxylat, Mischungen von Carboxylaten, Phosphonat, Phosphat, Phosphit und Mischungen der genannten Liganden oder Anionen.

4. Abbinde- und Erhärtungsbeschleuniger nach Anspruch 3, **dadurch gekennzeichnet, dass** das Carboxylat-Anion Formiat und/oder Acetat und/oder Glykolat und/oder Laktat und/oder Maleinat und/oder Citrat und/oder Tartrat und/oder Oxalat und/oder Malonat ist.

5. Abbinde- und Erhärtungsbeschleuniger gemäß mindestens einem der Ansprüche 1 bis 4, **dadurch gekennzeichnet, dass** die Aluminiumverbindung ein Komplex und/oder ein Salz des Aluminiums ist, welcher/welches/welche neben den Anionen auch Hydroxylgruppen enthalten.

6. Abbinde- und Erhärtungsbeschleuniger gemäß mindestens einem der Ansprüche 1 bis 5, **dadurch gekennzeichnet, dass** das Polymer als Monomereinheiten Acrylsäure-dialkylaminoalkylester und/oder Methacrylsäure-dialkylaminoalkylester und/oder Dialkylaminoalkylacrylamid und/oder Dialkylaminoalkylmethacrylamid und/oder 2-(Acryloyloxy)-ethyl-trialkylammoniumchlorid und/oder 2-(Methacryloyloxy)-ethyl-trialkylammoniumchlorid und/oder 3-(Methacrylamido)-propyl-trialkylammoniumchlorid und/oder 3-(Acrylamido)-propyl-trialkylammoniumchlorid enthält.

7. Abbinde- und Erhärtungsbeschleuniger gemäß Anspruch 6, **dadurch gekennzeichnet, dass** das Polymer als Monomereinheiten Acrylsäure-2-dimethylaminoethylester und/oder Methacrylsäure-2-dimethylaminoethyl-ester und/oder 2-(Dimethylamino)-ethylacrylamid und/oder 2-(Dimethyl-amino)-ethylmethacrylamid und/oder 2-(Acryloyloxy)-ethyl-trimethylammoniumchlorid und/oder 2-(Methacryloyloxy)-ethyl-trimethylammoniumchlorid und/oder 3-(Methacrylamido)-propyl-trimethylammoniumchlorid und/oder 3-(Acrylamido)-propyl-trimethylammoniumchlorid enthält.

8. Abbinde- und Erhärtungsbeschleuniger gemäß mindestens einem der Ansprüche 1 bis 7, **dadurch gekennzeichnet, dass** das mittlere Molekulargewicht des Polymers mindestens 100.000 Dalton, insbesondere mindestens 1.000.000 Dalton beträgt.

9. Abbinde- und Erhärtungsbeschleuniger gemäß Anspruch 8, **dadurch gekennzeichnet, dass** das Polymer in einer wässrigen Lösung mit einem pH von mindestens 9, insbesondere von 11 bis 13, löslich ist.

10. Abbinde- und Erhärtungsbeschleuniger gemäß mindestens einem der Ansprüche 1 bis 9, **dadurch gekennzeichnet, dass** mindestens eine Aluminiumverbindung und mindestens ein Polymer als Mischung vorliegen.

11. Abbinde- und Erhärtungsbeschleuniger gemäß mindestens einem der Ansprüche 1 bis 10, **dadurch gekennzeichnet, dass** er eine wässrige Lösung oder eine Suspension oder ein Pulver ist.

12. Abbinde- und Erhärtungsbeschleuniger gemäß Anspruch 11, **dadurch gekennzeichnet, dass** in der wässrigen Lösung oder in der Suspension die Aluminiumverbindung in einer Konzentration, gemessen als Gewichtsprozent Al₂O₃ von mindestens 6%, vorzugsweise von 6 bis 25 % und insbesondere von 6 bis 20 % vorliegt.

13. Abbinde- und Erhärtungsbeschleuniger gemäß Anspruch 11 oder 12, **dadurch gekennzeichnet, dass** in der wässrigen Lösung oder in der Suspension das Polymer in einer Konzentration von mindestens 0,005 Gewichtsprozent, vorzugsweise in einer Konzentration von 0,005 bis 5 Gewichtsprozent, insbesondere von 0,005 bis 3 Gewichtsprozent vorliegt.

14. Abbinde- und Erhärtungsbeschleuniger gemäß Anspruch 11, **dadurch gekennzeichnet, dass** im Pulver die Aluminiumverbindung in einer Konzentration, gemessen als Gewichtsprozent Al₂O₃ von mindestens 15%, vorzugsweise von 15 bis 60%, vorliegt.

15. Abbinde- und Erhärtungsbeschleuniger gemäß Anspruch 11 oder 14,
**dadurch gekennzeichnet, dass** im Pulver das Polymer in einer Konzentration von mindestens 0,025 Gew.-%, vorzugsweise von 0,025 bis 5 Gew.-% vorliegt.

16. Verfahren zur Beschleunigung des Abbindens und/oder Erhärtens von Zement oder anderen hydraulischen Bindemitteln, **dadurch gekennzeichnet, dass** ein Abbinde- und Erhärtungsbeschleuniger gemäß mindestens einem der Ansprüche 1 bis 15 als Gemisch oder als Zweikomponentensystem appliziert wird.

17. Verfahren gemäß Anspruch 16, **dadurch gekennzeichnet, dass** bei dem Zweikomponentensystem mindestens eine Aluminiumverbindung und mindestens ein Polymer getrennt appliziert werden.

18. Verwendung eines Abbinde- und Erhärtungsbeschleuniger nach mindestens einem der Ansprüche 1 bis 15 im Nassspritzverfahren.

19. Verwendung eines Abbinde- und Erhärtungsbeschleuniger nach mindestens einem der Ansprüche 1 bis 15 im Trockenspritzverfahren.

20. Betone, enthaltend Abbinde- und Erhärtungsbeschleuniger gemäß mindestens einem der Ansprüche 1 bis 15.
